# EUROPEAN PATENT APPLICATION

(11) **EP 4 733 713 A1**
(43) Date of publication of application: **29.04.2026**
(21) Application number: 25210620.8
(22) Date of filing: 23.10.2025
(51) Int. Cl.: G01B 11/00, G06T 7/62

(54) **DIMENSION MEASUREMENT APPARATUS AND/OR METHOD OF USE THEREOF**

(30) Priority: 23.10.2024 GB 202415592
(71) Applicant: Ensiovision Limited, Mexborough Yorkshire S64 8AA (GB)
(72) Inventor: Mason, Tim, Mexborough, S64 8AA (GB); Mason, Aidan, Mexborough, S64 8AA (GB); Stacey, Mark, Mexborough, S64 8AA (GB); Fawcett, Roger, Mexborough, S64 8AA (GB); Fawcett, Oliver, Mexborough, S64 8AA (GB); Bolton, Rowan, Mexborough, S64 8AA (GB); McGowan, Jon, Mexborough, S64 8AA (GB)
(74) Representative: Tomkinson, Alexandra

(57) **Abstract**

Dimension measurement apparatus is provided including: image capture means for capturing one or more images of at least one item in use; and micro-processing means arranged in use to receive and process the one or more captured images, and calculate one or more dimensions of the at least one item in the one or more captured images.

The image capture means are arranged to capture a plurality of the images of the at least one item in a pre-determined period of time in use. The micro-processing means are further arranged in use to: identify the presence of one or more objects, which may or may not include the at least one item, within each of the plurality of captured images in the pre-determined period of time to provide a measure of identified objects; identify one or more of the captured images from the plurality of captured images for which the measure of identified objects is the lowest during the pre-determined period of time; and use the identified one or more captured images for which the measure of identified objects is the lowest to calculate one or more dimensions of the at least one item in use.

## Description

The present invention relates to dimension measurement apparatus and/or to a method of using dimension measurement apparatus for measuring dimensions of one or more items in use.

Although the following description refers almost exclusively to dimension measurement apparatus for use on a fork lift truck, it will be appreciated by persons skilled in the art that the apparatus of the present invention could be used on any movable or stationary vehicle or material handling apparatus that requires dimension measurements of one or more items to take place in use.

In the logistics market, it is known to provide warehouse tracking systems which automatically scan, track, weigh and/or record dimensions of one or more items that are being stored and/or moved within a warehouse or storage facility in use. The one or more items are typically moved about on pallets within the warehouse or storage facility using fork lift trucks, although cranes, conveyor belts, autonomous vehicles and/or the like can also be used. It is known to use cameras on fork lift trucks to capture images of the palleted items being transported in use and for these images to be analysed to allow dimension measurements to be extracted from the same. The dimension measurements can be used to optimise packing of items and pallets and for customer invoicing and billing purposes. However, problems associated with current warehouse tracking systems and dimension measurement apparatus is that warehouse or storage facilities are typically extremely cluttered environments, with large numbers of pallets or items in close proximity to each other, particularly at the pick-up and drop-off points of the palleted items journey. For example, when the forklift truck is collecting a pallet of items from a lorry, there are often large numbers of pallets stacked next to each other in the lorry. When the forklift truck is depositing the pallet in a storage location within the storage facility, it is often stacked next to other pallets. It is therefore difficult for current apparatus and methods of capturing dimension data to distinguish the one or more items/pallets being analysed from other surrounding items/pallets in the locality. As such, the dimensions of two or more adjacent pallets may be incorrectly calculated as the dimensions of a single pallet.

Furthermore, as the fork lift truck transporting the pallet items travels around the warehouse or storage facility in use, the fork lift truck passes in close proximity to other stacked pallets that may interfere with dimension measurements of the transported pallet. In addition, due to the high speed at which the fork lift truck is typically travelling around the warehouse or storage facility, the fork lift truck is only in contact with the pallet/items being transported for a relatively short period of time. This reduces the time available for the fork lift truck to take accurate dimension measurements, thereby resulting in inaccuracies in the data being recorded by the tracking systems and therefore inaccuracies in the resulting packing optimization and invoicing/billing calculated using the dimensions of the items/pallets.

It is therefore an aim of the present invention to provide dimension measurement apparatus that improves the accuracy of taking one or more dimensions relating to one or more items in use.

It is a further aim of the present invention to provide an improved method of using the dimension measurement apparatus for measuring one or more dimensions of one or more items in use.

It is a yet further aim of the present invention to provide a fork lift truck or material handling apparatus that includes dimension measurement apparatus.

It is a yet further aim of the present invention to provide a method of using a fork lift truck or material handling apparatus including dimension measurement apparatus for measuring one or more dimensions of one or more items being transported or moved by the truck or apparatus in use.

According to a first aspect of the present invention there is provided dimension measurement apparatus, said dimension measurement apparatus including:
- image capture means for capturing one or more images of at least one item in use; and
- micro-processing means arranged to receive and process the one or more captured images, and calculate one or more dimensions of the at least one item in the one or more captured images in use;
characterised in that:
the image capture means are arranged to capture a plurality of the images of the at least one item in a pre-determined period of time in use; and
the micro-processing means are further arranged to:
   - identify the presence of one or more objects, which may or may not include the at least one item, within each of the plurality of captured images in the pre-determined period of time to provide a measure of identified objects;
   - identify one or more of the captured images from the plurality of captured images for which the measure of identified objects is the lowest during the pre-determined period of time; and
   - use the identified one or more captured images for which the measure of the identified objects is the lowest to calculate the one or more dimensions of the at least one item captured in the images in use.

Thus, the present invention provides apparatus for identifying "clutter" or objects in close proximity to an item that might interfere with an item dimension measurement or calculation process and discount this clutter or objects as much as possible in order to minimise inaccuracies of the dimension measurement process of the item that may arise. In particular, the apparatus of the present invention minimises the probability of the captured item dimension measurements or calculations including other objects or clutter by measuring or calculating item dimensions when the measure of objects or clutter is identified as being the lowest. The resulting item dimensions measured or calculated are more accurate than using conventional methods and therefore subsequent data calculated using the item dimension data is also more accurate, such as for example, packing optimization data or customer billing/invoice data.

Preferably the micro-processing means are arranged to apply one or more pre-determined criteria to the one or more identified objects or data from the image capture means to determine if they are to be included in the measure of identified objects for the captured image(s). For example, one or more objects falling outside of the pre-determined criteria may be discounted from inclusion in the measure of identified objects.

In one embodiment the image capture means are arranged to detect the presence of the one or more objects within the captured image(s), and the micro-processing means is arranged to determine whether the detected one or more objects should be identified as one or more objects for inclusion in the measure of identified objects for said captured image(s).

In one embodiment the image capture means are arranged to provide one or more points or pixels within the capture image(s) with identification means or one or more cartesian coordinates, and the micro-processing means determines whether the identification means or one or more cartesian coordinates meets the one or more pre-determined criteria for inclusion in the measure of identified objects for said captured image(s).

In one embodiment the micro-processing means is arranged to detect the presence of the one or more objects within the captured image(s) and identifies whether the detected one or more objects should be included in the measure of identified objects in use.

Preferably the micro-processing means includes any or any combination of hardware, software, one or more algorithms, artificial intelligence (AI), one or more machine learning models, one or more neural networks, stereo matching technology and/or the like.

In one embodiment the micro-processing means includes an object and/or image object detection algorithm and is used to identify and provide a measure of the objects in the one or more images.

In one embodiment the image capture means or the micro-processing means are arranged to detect the presence of one or more, any or all objects, which may or may not include the at least one item, in the whole or substantially the whole of each of the captured image(s).

In one embodiment the image capture means or the micro-processing means are arranged to detect the presence of one or more, any or all objects, which may or may not include the at least one item, in a pre-determined region or regions of each of the captured image(s).

Preferably the at least one item for which dimensions are to be measured or calculated is at least a first item and the detection of any items other than the at least first item is at least a second item or the one or more objects.

Preferably the object is any clutter or object other than the item(s) for which the at least one dimension is required (i.e. an object is something for which dimensions are not required in one example).

Preferably use of the term "the measure of identified objects" can represent any or any combination of a number of individual objects and/or items detected, an area or absolute value of area of objects and/or items detected, a % of area of objects and/or items detected, a volume or an absolute volume of objects and/or items detected, a % volume of objects and/or items detected, an object and/or item score or value and/or the like.

Preferably the "lowest measure" of the identified objects is when the least number, area, % area, volume, % volume, score or value is calculated or identified for the objects in the captured image(s) in use (i.e. the lowest amount of clutter or the lowest clutter score in a captured image).

In a preferred embodiment the measure of identified objects is a % area. As such, in this embodiment, the micro-processing means are arranged to identify the % area of objects in the one or more images or in the pre-determined region or regions of the one or more images and identify the image(s) with the lowest % area of identified objects and use this/these image(s) for measuring and/or calculating the one or more dimensions of the at least one item in use.

In one embodiment for an object and/or item to be identified or classed as an object and/or item, the object and/or item should meet the one or more pre-determined criteria.

Preferably the one or more pre-determined criteria include any or any combination of a distance or distance range the object and/or item is above or located with respect to a floor or ground surface in use; an object and/or item having one or more minimum and/or maximum dimensions; an object and/or item having a pre-determined shape.

In one example, the image capture means are in the form of one or more 3D cameras and each point or pixel, or one or more points or pixels, in the captured image(s), are provided with the identification means, the one or more cartesian coordinates and/or a height measurement above a floor or ground surface. Preferably the micro-processing means identifies the point or pixel as an object if the height and/or one or more cartesian coordinates (i.e. Y -axis coordinate) allocated to it by the one or more 3D cameras is equal to or greater than a minimum height or minimum Y-axis coordinate above a floor or ground surface.

Preferably the one or more cartesian coordinates is an X-axis coordinate, a Y-axis coordinate, and/or a Z-axis coordinate.

In one embodiment the one or more items for which dimensions are to be measured is distinguished from the one or more objects (for which dimensions are not required) based on any or any combination of identification means (ID means); a measured, expected or predicted shape, design and/or size of the one or more items; location of the one or more items in the one or more captured images; or location of the one or more items within a pre-determined region or regions of the one or more captured image(s).

In one embodiment the one or more pre-determined criteria for identification of the one or more objects is adjustable in use. For example, adjustment of the one or more pre-determined criteria can take place manually or automatically via the micro-processing means. This allows a user to change the pre-determined criteria depending on the type of item for which dimensions are to be measured and/or the type of objects that may be considered clutter within a captured image.

In one embodiment the micro-processing means are arranged to identify the presence of all objects meeting one or more pre-determined criteria, which may or may not include the at least one item, within each image or within a pre-determined region or regions of each image of the plurality of images captured during the pre-determined period of time to provide the measure of identified objects.

Preferably the pre-determined region or regions includes a first pre-determined region representing the item region or an approximation to the item region (i.e. approximately where the at least one item is or is expected to be in the image), and at least a second pre-determined region representing the clutter or object region or an approximation of the clutter or object region (i.e. approximately where the one or more objects or clutter is or is expected to be in the image).

For example, the first pre-determined region could be a position on the forks of a forklift truck where a pallet supporting one or more items in use will be or is likely to be.

Preferably the at least second pre-determined region is where the clutter or objects are likely to be located. For example, the at least second pre-determined region can be the region surrounding and external to the position on the forks of a forklift truck where a pallet supporting one or more items in use will be or is likely to be.

In one embodiment only objects identified in the at least second pre-determined region(s) are used to provide the measure of identified objects. For example, the item or anything within the first pre-determined region is ignored or discounted for the purposes of providing a measure of identified objects. However, the item or anything within the first pre-determined region could be included in the measure of identified objects if required.

In one embodiment objects or clutter identified in the at least second pre-determined region need to be discounted, removed or taken away from any item dimension measurements, calculations or data.

In one embodiment the first and at least second pre-determined regions are different, distinct or separate positional regions/locations within the image(s) (which preferably correspond to regions in the physical locality).

In one embodiment the first and at least second pre-determined regions can be adjacent to each other, immediately adjacent to each other, can be overlapping with each other, and/or can be a spaced distance apart from each other.

Preferably the at least second pre-determined region partially or wholly surrounds the at least first pre-determined region.

In one embodiment the first region is a pre-determined region and the at least second region is anything in the image that is not within the first pre-determined region.

Preferably the second region or pre-determined region is larger in size, area, dimensions, shape and/or the like compared to the first pre-determined region.

In one embodiment the second region or pre-determined region consists of or includes the region in front of and to the sides of the first pre-determined region. For example, when the apparatus is used on a fork lift truck, the front region is the region in front of the fork lift truck or the direction of travel of the fork lift truck.

In one embodiment the second region or second pre-determined region is C-shaped or substantially C-shaped.

In one embodiment the first pre-determined region is the size or approximate size of a standard pallet on which one or more items might be carried or located in use. For example, the first pre-determined region could be approximately 1.2m +/-0.05m wide x 1.0m +/- 0.05m long.

In one embodiment the second pre-determined region may have the same, similar or approximate width of a standard pallet to the front and to the sides of the first pre-determined region. For example, the second pre-determined region could have a width of 1.2m +/- 0.05m extending outwardly from the outermost front and side edges of the first pre-determined region.

In one embodiment the size and/or shape of the pre-determined region(s), the first pre-determined region and/or the at least second pre-determined region is adjustable in use. This allows, for example, a user to manually adjust the regions depending on the size of the pallet or size of the items being processed in use.

In one embodiment the size and/or shape of the pre-determined region(s), the first pre-determined region and/or the at least second pre-determined region is fixed in use.

Preferably the pre-determined region(s), the first pre-determined region and/or the at least second pre-determined region can be adjusted manually by a user and/or can be adjusted automatically by the micro-processing means and/or image capture means.

In one embodiment one or more dimensions of the at least one item detected within the image(s) or first pre-determined region or item region of the image(s) are calculated to provide item dimension calculation data in use.

In one example, the image capture means are in the form of one or more 3D cameras and each point or pixel, or one or more points or pixels, in the at least second pre-determined region of the captured image(s), are provided with a cartesian coordinate or height measurement above a floor or ground surface. Preferably the micro-processing means identifies the point or pixel as an object if the height or cartesian coordinate allocated to it by the one or more 3D cameras is equal to or greater than a minimum height above a floor or ground surface.

Preferably the item dimension data is calculated or arranged to be calculated by dimension measuring means and/or the micro-processing means.

In one embodiment item dimension data is calculated for the at least one item detected in the first pre-determined region.

In one embodiment the measure of identified objects is an object or clutter score or value and is calculated and/or given to objects detected in the at least second pre-determined region or object region.

In one embodiment the micro-processing means or dimension measuring means are arranged to calculate dimension data for the at least one item and/or dimension data or a value for the one or more objects.

In one embodiment the micro-processing means or dimension measuring means is arranged to calculate the dimension data for the at least one item and/or the one or more objects using any or any combination of hardware, software, one or more algorithms, artificial intelligence (AI), one or more machine learning models, one or more neural networks, stereo matching technology and/or the like.

Preferably the micro-processing means or dimension measuring means generates dimension calculation data of the item and the measure of identified objects for each image captured by the image capture means. For example, a data pair can be provided for each image; the measure of identified objects and the item dimension data. Thus, preferably an item dimension calculation and the measure of identified objects is associated with each image generated by the image capture means and/or processed by the micro-processing means.

Preferably the item dimension calculation data associated with the image(s) with the lowest measure of identified objects is used as final output item dimension data.

In one embodiment, where a plurality of images have the same lowest measure of identified objects, the micro-processing means is arranged to use: the first image identified with the lowest measure of identified objects; or a mean, mode or median of all the images identified with the same lowest measure of identified objects, on which the final output item dimension data is based.

In one embodiment the measure of identified objects can be an absolute value, a percentage value, a fraction and/or the like.

Preferably the one or more pre-determined criteria used to identify an object within the pre-determined region or second pre-determined region and contribute to the measure of identified objects includes any or any combination of: a distance or minimum distance the object is above a floor or ground surface in use; an object having one or more minimum and/or maximum dimensions; an object having a pre-determined shape and/or the like.

In one example, when the image capture means are in the form of 3D cameras, the one or more criteria for identifying an object and allocating a measure of identified objects or a clutter score to the same includes or consist of any object that is a pre-determined or minimum distance above a floor or ground surface, such as for example, at least 10cm above a ground or floor surface in use.

In one embodiment the image capture means includes one or more cameras, video cameras, 3D cameras and/or the like.

In one example, two cameras or two 3D cameras are used for the dimension measurement apparatus.

Preferably the image capture means are arranged to capture images to the area or region in front of, to the sides and/or below where the image capture means are located in use.

Preferably the image capture means are arranged to capture one or more images, and these one or more images can include video data, live stream video data, one or more "snap-shot" images and/or the like.

Preferably the image data captured is digital image data or in the form of digital image data files.

In one embodiment the micro-processing means include a computer and/or the like.

In one embodiment the micro-processing means is provided on and/or associated with a forklift truck, a vehicle or material handling apparatus.

In one embodiment the micro-processing means is arranged to detect the presence of objects and/or items using stereo matching technology and/or the like. For example, 3D cameras can be used to create a 3D point cloud of the pre-determined region using stereo matching technology.

In one embodiment the apparatus or micro-processing means can use software, autonomous neural networks (ANN), hardware, Artificial Intelligence (AI) and/or the like to provide the clutter or object score or value and/or the item dimension measurement data in use.

In one embodiment data storage means are provided for storing data thereon in use, such as for example, clutter/object score data, the item dimension data and/or the like.

In one embodiment the data storage means can include any or any combination of a digital data storage device, solid state drive, hard disk drive, flash drive, optical drive, cloud storage and/or the like.

In one embodiment communication means are provided on and/or associated with the apparatus, the image capture means and/or micro-processing means for sending and/or receiving the data relating to a detected object, the measure of identified objects and/or the item dimension data to each other and/or to a remote location in use.

Preferably the communication means can include one or more transmitters, receivers, transceivers and/or the like.

Preferably the communications means can include wired or wireless means.

Preferably the one or more dimensions that are calculated from the one or more captured images can include width, length, depth, height, area, volume, % area or % volume and/or the like.

In one embodiment the at least one item is, includes or consists of a pallet of items.

In one embodiment the pre-determined period of time over which the images are captured for and/or for which the dimension measurements take place is equal to or substantially equal to the time period for which the at least one item is being moved and/or transported within a locality in use. For example, this could be classed as the "journey time" or "transportation time" of the one or more items in use. However, it will be appreciated that any pre-determined time period during which the items are stationary and/or being moved could be used.

In one example, the pre-determined period of time starts from when the at least one item is picked up at a first location by a forklift truck or material handling apparatus and ends when the at least one item is deposited at a second location by the forklift truck or material handling apparatus.

Preferably the second location is different to the first location.

In one embodiment the pre-determined period of time is less than 60 seconds, and is further preferably approximately 5-20 seconds.

Preferably a plurality of images are taken by the image capture means during the pre-determined period of time. For example, up to 10 images per second could be taken by the image capture means during the pre-determined period of time. Thus, for a 10 second journey, there may be 100 images which are each provided with a clutter score and dimension calculation data.

In one embodiment the dimension measurement apparatus can be retrofitted to an existing forklift truck, vehicle or material handling apparatus in use.

In one embodiment the vehicle or material handling apparatus can be any vehicle or apparatus that is involved in the movement and/or lifting of goods or items in a locality in use. The vehicle or apparatus could be fixed or movable across a surface in use. Preferably the vehicle or apparatus has lifting means associated with or provided on the same for raising and/or lowering goods or items in a locality in use. For example, the vehicle or material handling apparatus could be in the form of or include a crane, goods lifting apparatus, fixed crane, stationary or mobile crane, fork lift truck, boom truck, a powered vehicle, a powered material handling apparatus, a manually powered vehicle, goods container moving device, pallet moving device and/or the like.

According to one aspect of the present invention there is provided dimension measurement apparatus, said dimension measurement apparatus including image capture means for capturing one or more images of at least one item in use; micro-processing means arranged in use to receive and process the one or more captured images, and calculate one or more dimensions of the at least one item captured in the one or more images; characterised in that the image capture means are arranged to capture a plurality of the images of the at least one image in a pre-determined period of time in use; and the micro-processing means are further arranged in use to:
a) identify the presence of one or more objects meeting one or more pre-determined criteria, which may or may not include the at least one item, within a pre-determined region or regions of each image of the plurality of images captured during the pre-determined period of time;
b) provide a measure of identified objects to each image; and
c) identify one or more of the images for which the measure of identified objects is the lowest and use the identified one or more images to calculate the one or more dimensions of the at least one item in use.

According to an aspect of the present invention there is provided a method of using dimension measurement apparatus, said method including the steps of:
- capturing one or more images of at least one item in use;
- receiving and processing the one or more captured images; and
- calculating one or more dimensions of at least one item in the one or more captured images;
characterised in that the method further includes the steps of:
capturing a plurality of the images of the at least one item in a pre-determined period of time; and
- identifying the presence of one or more objects, which may or may not include the at least one item, within each of the plurality of captured images in the pre-determined period of time to provide a measure of identified objects;
- identifying one or more of the captured images from the plurality of captured images for which the measure of identified objects is the lowest; and
- using the identified one or more captured images to calculate one or more dimensions of the at least one item captured in the images.

According to a further aspect of the present invention there is provided a forklift truck or material handling apparatus including dimension measurement apparatus.

According to a yet further aspect of the present invention there is provided a method of using a forklift truck of material handling apparatus that include dimension measurement apparatus.

Embodiments of the present invention will now be described with reference to the following figures, wherein:

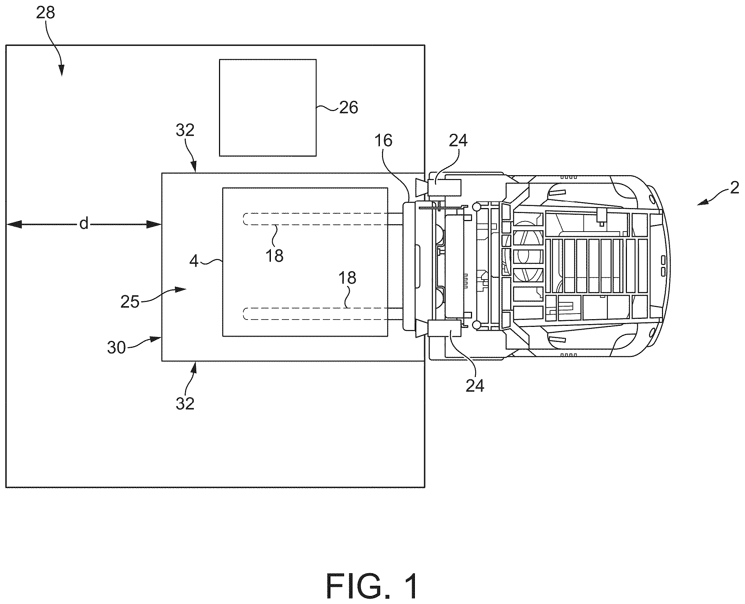

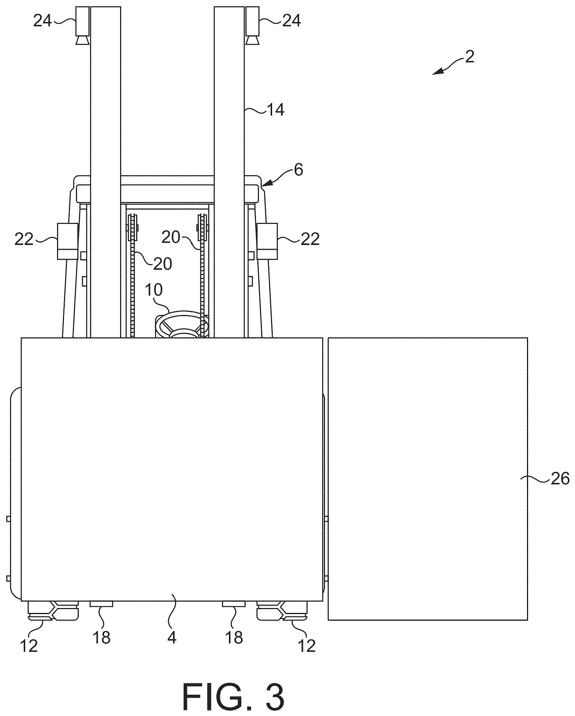

Figures 1-3 show a top plan view, a side view and a front view of the apparatus used on a forklift truck according to an embodiment of the present invention.

Referring to the figures, there is illustrated a fork lift truck 2 including dimension measurement apparatus according to an embodiment of the present invention.

The fork lift truck 2 is a movable powered vehicle that is typically used within a goods storage facility for moving goods or items loaded onto pallets 4 within the facility. The forks of the truck are slidable in and out of apertures (now shown) provided in the pallet for lifting and transporting purposes.

The fork lift truck 2 typically comprises an operator's cabin 6 containing an operator's seat 8, a steering wheel 10 and associated vehicle controls. The fork lift truck 2 has four wheels 12 to allow the truck to move across a ground surface in use. A mast 14 is provided at the front of the truck 2 on which a carriage 16 is movably mounted. A pair of outwardly protruding and spaced apart forks 18 are mounted on the carriage 16 for location in location holes on a goods pallet in use. A guard can also be mounted on carriage 16 to prevent any goods loaded on the forks 18 from moving towards the operator in use. A lifting mechanism 20 is provided on the mast 14 for allowing reciprocal linear movement of the carriage 16 along the mast 14 in use between raised and lowered positions. A tilting mechanism is also associated with mast 14 to allow the same to be moved at angles with respect to the vertical in use. Lights 22 are provided on the truck 2 to help an operator of the truck to see in poor light conditions and to allow other people within the vicinity of the truck 2 to see the truck in use.

The movable carriage 16 typically includes two lateral spaced apart arm members or cheek plates with a joining arm member located therebetween. The lateral spaced apart arm members or cheek plates move within the mast structure 14 to allow movement of the movable carriage 16 in use.

Image capture means in the form of cameras 24 are attached to mast 14 by suitable attachment means. The cameras 24 are positioned so as to capture visual data relating to the pallet being transported on the forks 18. The images captured by the cameras 24 are used to calculate, monitor and/or detect one or more dimensions of the pallet and/or items being transported on the pallet in use. Other parameters and/or measurements can be calculated using the captured image data, such as for example, the quality and appearance of the items being transported.

Problems associated with current methods and processes used for measuring dimensions of the pallet and/or items is that the pallet being transported are typically collected from a start position where there are lots of pallets (at least one of which is identified as 26 in the figures) stacked adjacent to each other, and are deposited at a finish position where there are also lots of pallets. It is therefore difficult for the current dimension measuring methods to distinguish the dimensions of the pallet being transported between the start and end positions relative to the other surrounding pallets in the vicinity. In addition, since the truck 2 is only in contact with the pallet to be measured for a relatively short period of time, it is difficult for accurate dimensions of the pallet to be calculated quickly.

In accordance with the present invention, dimension measurement apparatus is provided on the forklift truck 2 which is designed to provide more accurate measurements of the pallet or item being transported by the truck 2 in use and to discount clutter that might interfere with the item measurements.

According to one embodiment of the present invention, the cameras 24 are 3D cameras and so are able to calculate depth, as well as length and width. In particular, the 3D cameras are able to allocate one or more cartesian coordinates to one or more points or pixels within the captured images and these cartesian coordinates can help determine whether an object is present or not at the point or pixel in the image.

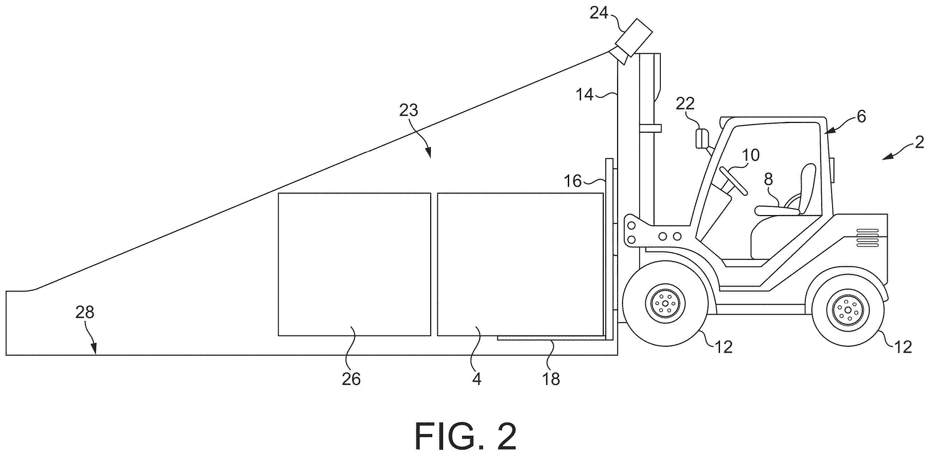

The cameras 24 are located towards the top of mast 14 and are arranged so as to capture images of the pallet being transported on the forks 18 and the area immediately adjacent the pallet. The field of view 23 of the cameras 24 is shown as a shaded area in figure 2. For example, the cameras 24 are typically arranged to face in a forwardly and downwardly direction.

The cameras 24 are arranged so as to capture a plurality of images over a pre-determined period of time. The pre-determined period of time can be any suitable time period but, in one example, the pre-determined period is the journey time from when the truck 2 picks up the pallet in a first location to when the truck 2 deposits the pallet at a second, different location.

Micro-processing means in the form of a computer is provided onboard the fork lift truck 2 and is arranged so as to receive the plurality of images from the 3D cameras 24, together with the one or more cartesian coordinates for the one or more points and pixels within the captures images, and process the same. The micro-processing means defines a first pre-determined region or item region 25 on each image relating to approximately the position of the palleted item 4 for which one or more dimensions are to be measured in use. This item pre-determined region, in one example, is typically the size of a standard pallet on which the items are located and is 1.2m wide by 1.0m long.

The micro-processing means defines a second pre-determined region or object/clutter region 28 on each image relating to approximately the position of where any objects 26 or clutter that might interfere with the dimension measuring process of the palleted item might be located in use.

In figure 1, the second pre-determined region or clutter region (shaded area) 28 is shown as being C-shaped or substantially C-shaped in form, is immediately adjacent the first pre-determined region 25 and extends outwardly from the outermost front and side edges 30, 32 of the first pre-determined region 25 respectively. In one example, the second pre-determined region extends outwardly by a distance 'd' of approximately 1.2m.

With these two distinct fixed regions defined in each image, the micro-processing means then identifies the presence of one or more objects within the second pre-determined region 28 to provide a measure of identified objects. In one example, the measure of identified objects is a % area or % volume and is calculated based on whether the cartesian coordinates for one or more (or each) points or pixels within the second pre-determined region and allocated by the 3D cameras meets one or more pre-determined criteria. The one or more pre-determined criteria could for example include the object having a certain shape, certain minimum dimensions, a pre-determined distance the object is above a floor or ground surface and/or the like. However, in this embodiment, the micro-processing means classifies or identifies a point or pixel as containing an object if the cartesian coordinates (i.e. the Y-axis measurement) for that point or pixel indicates it is a minimum distance above a floor or ground surface, such as for example a minimum of 10cm above a floor or ground surface. This typically discounts any height measurements arising, for example, from unevenness of the floor or ground surface, and typically covers the likelihood of an adjacent pallet being identified which may interfere with the item measurements that need to be taken.

If a pallet (classified as an object in this application) is adjacent an item to be measured, it will be located in the second pre-determined region 28 and the item to be measured will be located in the first pre-determined region 25. The micro-processing means provides a % area of the pallet/objects in the second pre-determined region 28 (i.e. anything in the second pre-determined region where the height is above 10cm above the ground). This is typically classed as the clutter score. The micro-processing means then identifies which of the plurality of captured images has the lowest % area of objects in the second pre-determined region or the lowest clutter score. Ideally, the measured or identified objects or the % area in the identified images will be zero, meaning there are no other objects or clutter in the image that will interfere with the dimension measurements of the item in the first pre-determined region. However, the lowest % area may be above zero.

The micro-processing means calculates one or more dimensions of the palleted item 4 detected in the first item region 25 for each image. Thus, each image has a data pair associated with the same comprising a clutter/object score (measure of identified objects) and item dimension data.

The image capture means is arranged to take a plurality of images within the pre-determined time period or journey time. As the journey time can be between 5-20 seconds and the image capture means can, for example, take up to 10 images per second during this journey time, the micro-processing means processes a relatively large number of images and associates a clutter score/measure of identified objects and item dimension data with each image. The micro-processing then selects the image(s) with the lowest clutter score/measure of identified objects and uses the item dimension data associated with these images as the final item dimension data. This final item dimension data represents the most accurate dimension data with the least probability of clutter being accidentally included in the dimension data and can be used for other calculations, such as for example optimizing packing, calculating customer invoices and/or the like.

If the items on the pallet are larger than the pallet itself and protrude from the item region 25 into the second pre-determined region 28, this does not impact the method as the clutter score given to the detected protrusion remains the same for all the captured images in the pre-determined time period.

Thus, in one example, when the pallet of items 4 is being collected form a first location in a locality at the start of the pre-determined time period, the pallet 4 is surrounding by lots of other pallets 26 and a clutter score/measure of identified objects of 100% may be given for the initial image. At a second different location in a locality at the end of the pre-determined time period, the pallet 4 is deposited in a locality surrounded by lots of other pallets 26 and may also be given a clutter score/measure of identified objects of 100%. However, when the pallet is being transported between the first and second locations, there are no other pallets surrounding the pallet 4 and so one or more intermediate images are given a clutter score/measure of identified objects of 0%. As such, the micro-processing means selects the images with the 0% clutter score/measure of identified objects and takes the dimension data from these images to use as the final item dimension data.

If a plurality of images are captured and processed that have a clutter score/measure of identified objects of 0% associated with the same, the micro-processing means may use a median of the item dimension data taken from these images with the same low clutter score to use as the final item dimension data.

In a busy warehouse environment, it is unlikely that the lowest clutter score/measure of identified objects will be 0% and is more likely to be 10% for example. The images associated with this clutter score/measure of identified objects of 10% are then used to extract the item dimension data for use as, or for use in calculating, the final item dimension data.

It will be noted that determination of the pre-determined time period over which the images are captured can be undertaken using any suitable method or apparatus. In addition, the method of calculating the dimensions from the captured images can also be undertaken using any suitable dimension calculation method or apparatus.

## Claims

1. Dimension measurement apparatus, said dimension measurement apparatus including:
- image capture means for capturing one or more images of at least one item in use; and
- micro-processing means arranged to receive and process the one or more captured images, and calculate one or more dimensions of the at least one item in the one or more captured images in use;
**characterised in that**:
the image capture means are arranged to capture a plurality of the images of the at least one item in a pre-determined period of time in use; and
the micro-processing means are further arranged to:
- identify the presence of one or more objects, which may or may not include the at least one item, within each of the plurality of captured images in the pre-determined period of time to provide a measure of identified objects;
- identify one or more of the captured images from the plurality of captured images for which the measure of identified objects is the lowest during the pre-determined period of time; and
- use the identified one or more captured images for which the measure of the identified objects is the lowest to calculate the one or more dimensions of the at least one item in use.

2. The dimension measurement apparatus according to claim 1, wherein the measure of identified objects includes: a number of individual objects and/or items detected, an area or absolute area of objects and/or items detected, a % area of objects and/or items detected, a volume or absolute volume of objects and/or items detected, a % volume of objects and/or items detected, and/or an object score and/or item score.

3. The dimension measurement apparatus according to any preceding claim, wherein the micro-processing means are arranged to identify the presence of the one or more objects in the whole or substantially the whole of each of the one or more captured images, or in a pre-determined region or regions of each of the one or more captured images.

4. The dimension measurement apparatus according to any preceding claim, wherein the micro-processing means identifies the presence of one or more objects for inclusion in the measure of identified objects if the one or more objects or data received from the image capture means meet one or more pre-determined criteria.

5. The dimension measurement apparatus according to claim 4, wherein the one or more pre-determined criteria include any or any combination of a distance the object is above a floor or ground surface in use; an object having one or more minimum and/or maximum dimensions; an object having a pre-determined shape.

6. The dimension measurement apparatus according to any preceding claim, wherein the one or more items for which dimensions are to be measured is distinguished from the one or more objects based on any or any combination of identification means (ID means); a measured, expected or predicted shape, design and/or size of the one or more items and/or objects; location of the one or more items and/or objects in the one or more captured images; and/or location of the one or more items and/or objects within a pre-determined region or regions of the one or more captured image.

7. The dimension measurement apparatus according to claim 3 or 6, wherein the pre-determined region or regions includes a first pre-determined region representing an item region or an approximation to an item region, and at least a second pre-determined region representing a clutter or the object region or an approximation of a clutter or object region.

8. The dimension measurement apparatus according to claim 7, wherein the at least second pre-determined region partially or wholly surrounds the at least first pre-determined region; is C-shaped or substantially C-shaped; or the at least second pre-determined region consists of or includes a region in front of and to the sides of the first pre-determined region.

9. The dimension measurement apparatus according to claims 7 or 8, wherein the first pre-determined region is the size of or approximately the size of a standard pallet on which the one or more items might be carried or located in use; or is 1.2m wide +/- 0.05m and 1.0m long +/- 0.05m.

10. The dimension measurement apparatus according to any preceding claim, wherein the size and/or shape of the pre-determined region, the first pre-determined region and/or the second pre-determined region is adjustable in use; or is fixed in use.

11. The dimension measurement apparatus according to any preceding claim, wherein the micro-processing means are arranged to calculate the dimension data for the at least one item using any or any combination of hardware, software, one or more algorithms, artificial intelligence (AI), one or more machine learning models, stereo matching technology or one or more neural networks.

12. The dimension measurement apparatus according to any preceding claim, wherein when a plurality of images has the same lowest measure of identified objects, the micro-processing means are arranged to use the first captured image identified with the lowest measure of identified objects of the plurality of captured images; or a mean, mode or median of all the captured images identified with the lowest associated measure of identified objects.

13. The dimension measurement apparatus according to any preceding claim, wherein the apparatus is provided on a fork-lift truck, a vehicle or material handling apparatus.

14. The dimension measurement apparatus according to any preceding claim, wherein the pre-determined period of time over which the images are captured for and/or for which the dimension measurements take place is equal to or substantially equal to the time period for which the at least one item is being moved and/or transported within a locality in use; or starts from when the at least one item is first picked up at a first location and ends when the at least one item is deposited at a second location in use; or is less than 60 seconds.

15. A method of using dimension measurement apparatus, said method including the steps of:
- capturing one or more images of at least one item in use;
- receiving and processing the one or more captured images; and
- calculating one or more dimensions of the at least one item in the one or more captured images;
**characterised in that** the method further includes the steps of:
capturing a plurality of the images of the at least one item in a pre-determined period of time; and
- identifying the presence of one or more objects, which may or may not include the at least one item, within each of the plurality of captured images in the pre-determined period of time to provide a measure of identified objects;
- identifying one or more of the captured images from the plurality of captured images for which the measure of identified objects is the lowest during the pre-determined period of time; and
- using the identified one or more captured images for which the measure of the identified objects is the lowest to calculate one or more dimensions of the at least one item.
